# EUROPEAN PATENT SPECIFICATION

(11) **EP 2 836 085 B1**
(45) Date of publication and mention of the grant of the patent: **10.04.2019**
(21) Application number: 12866861.3
(22) Date of filing: 10.09.2012
(51) Int. Cl.: B65B 25/06

(54) **METHOD FOR STABILIZING PIGMENT IN FOODS FROM DISCOLORATION**
VERFAHREN ZUR STABILISIERUNG VON PIGMENTEN IN LEBENSMITTELN GEGEN EINE VERFÄRBUNG
PROCÉDÉS DE STABILISATION DES PIGMENTS DANS DES ALIMENTS CONTRE LA DÉCOLORATION

(30) Priority: 25.01.2012 US 201261590756 P; 06.03.2012 US 201261607258 P; 11.05.2012 US 201261646076 P; 31.08.2012 US 201213601872
(43) Date of publication of application: 18.02.2015
(73) Proprietor: Global Fresh Foods, Mountain View, California 94043 (US)
(72) Inventor: BELL, Laurence D., Mountain View, California 94043 (US)
(74) Representative: Gibson, Mark
(86) International application number: PCT/US2012/054480
(87) International publication number: WO 2013/112203

(56) References cited:
- EP-A1- 0 894 720
- WO-A1-97/36504
- JP-A- H09 201 182
- TW-A- 201 121 437
- US-A- 4 522 835
- US-A1- 2006 228 449
- US-A1- 2007 166 436
- US-A1- 2011 151 070
- US-A1- 2011 151 070
- SORHEIM O ET AL: "Colour of ground beef as influenced by raw materials, addition of sodium chloride and low oxygen packaging", MEAT SCIENCE, ELSEVIER SCIENCE, GB, vol. 81, no. 3, 1 March 2009 (2009-03-01), pages 467-473, XP025760894, ISSN: 0309-1740, DOI: 10.1016/J.MEATSCI.2008.09.010 [retrieved on 2008-10-02]
- ' Keeffe ET AL: "BIOCHEMICAL FACTORS INFLUENCING METMYOGLOBIN FORMATION ON BEEF FROM MUSCLES OF DIFFERING COLOUR STABILITY", !4eat Science, 1 January 1982 (1982-01-01), pages 209-228, XP55239595, Retrieved from the Internet: URL:http://ac.els-cdn.com/0309174082900870 /1-s2.0-0309174082900870-main.pdf?_tid=9b6 5ebae-b5ef-11e5-a19a-00000aacb35e&acdnat=1 452247821_b776cb243394c410f29916835ac08ef0 [retrieved on 2016-01-08]
- MANCINI R A ET AL: "Current research in meat color", MEAT SCIENCE, ELSEVIER SCIENCE, GB, vol. 71, no. 1, 1 September 2005 (2005-09-01), pages 100-121, XP027770658, ISSN: 0309-1740 [retrieved on 2005-09-01]
- ODDVIN SØRHEIM ET AL: "The storage life of beef and pork packaged in an atmosphere with low carbon monoxide and high carbon dioxide", MEAT SCIENCE, vol. 52, no. 2, 1 June 1999 (1999-06-01), pages 157-164, XP055209431, ISSN: 0309-1740, DOI: 10.1016/S0309-1740(98)00163-6
- MCMILLIN ET AL: "Where is MAP Going? A review and future potential of modified atmosphere packaging for meat", MEAT SCIENCE, ELSEVIER SCIENCE, GB, vol. 80, no. 1, 1 September 2008 (2008-09-01), pages 43-65, XP022795732, ISSN: 0309-1740, DOI: 10.1016/J.MEATSCI.2008.05.028 [retrieved on 2008-06-24]
- M JAKOBSEN ET AL: "The use of CO2 in packaging of fresh red meats and its effect on chemical quality changes in the meat: a review.", JOURNAL OF MUSCLE FOODS, vol. 13, no. 2, 1 January 2002 (2002-01-01), pages 143-168, XP055209482, US ISSN: 1046-0756

## Description

### TECHNICAL FIELD

This invention relates a method for stabilizing oxygen-dependent and oxygen-labile pigments from being damaged by the elevated carbon dioxide levels necessary to inhibit spoilage of fresh muscle foods, preserving the freshness and preventing discoloration of foodstuffs comprising said pigments.

### BACKGROUND

The storage-life of oxidatively-degradable foodstuffs such as fish, meat, and poultry is limited in the presence of a normal atmospheric environment. The presence of oxygen at levels found in a normal atmospheric environment leads to changes in odor, flavor, color, and texture resulting in an overall deterioration in quality of the foods either by chemical effect or by growth of aerobic spoilage microorganisms.

Modified atmosphere packaging (MAP) has been used to improve storage-life and safety of stored foods by inhibition of spoilage microorganisms and pathogens. MAP is the replacement of most of the normal atmospheric environment in a food storage pack with a single inert gas or a mixture of inert gases. The resulting gas in a MAP mixture is most often combinations of nitrogen (N₂) and carbon dioxide (CO₂) with a small amount of oxygen (O₂). In most cases, the bacteriostatic effect is obtained by a combination of decreased O₂ and increased CO₂ concentrations. Farber, J. M. 1991. Microbiological aspects of modified-atmosphere packaging technology: a review. J. Food Protect. 54:58-70.

US Patent Application Publication Nos. 2008/0003334, 2011/0151070 and 2011/0151084, and International Application WO2011/053676 provide methods and systems of preserving oxidatively-degradable foodstuffs in containers, such as totes, having an atmosphere that is low in O₂, and in some embodiments, high in CO₂. These methods and systems have demonstrated uniquely extended shelf life after removal from the "Controlled" atmosphere compared to conventional MAP and Vacuum packaging technologies. These publications are incorporated by reference in their entirety.

Notwithstanding the benefits imparted by these methods and systems, foodstuffs and other pigment containing materials can undergo discoloration in such a manner that the food is perceived by the consumer as not fresh. For example, myoglobin is an iron- and oxygen-binding protein that provides the desirable red color of most meats when the myoglobin protein in the muscle is fully oxygenated.

The color of consumable red meat will change to an unappealing darkish brown when left in air for too long a period of time. This is caused by denaturation of the myoglobin protein by spoilage organisms, desiccation and other deteriorative processes that render the myoglobin incapable of sufficiently reacting with oxygen to provide the desirable bright red pigment.
US 4,522,835 discloses the use of an atmosphere containing a low oxygen concentration then a modified atmosphere containing a small amount of carbon dioxide to establish and maintain a good color in fresh meat, poultry and fish.

### SUMMARY

This invention is predicated in part on the discovery of deoxygenation pretreatment methods, for preserving the color of foodstuffs comprising oxygen-dependent and/or oxygen-labile pigments, such as myoglobin, prior to the introduction of CO₂. Without being limited to any theory, it is believed that current MAP procedures employing an initial CO₂ flush with no deoxygenation pretreatment to maintain freshness of foodstuffs contribute to irreversible damage to the pigments. In particular, it is believed that as CO₂ is introduced into a sealed container, residual oxygen interacts with the CO₂ and pigment structure and chemistry in a manner that prevents the pigment from fully reoxygenating upon return to ambient air. Regardless of its mechanism, discoloration results in an "aged" appearance in the foodstuff that reduces their commercial value.

In one aspect, provided herein is a method to stabilize an oxygen-dependent or oxygen-labile pigment from discoloration for a period of time of at least 3 days in a sealed container, which method comprises
(1) reducing the oxygen concentration in the atmosphere in the container to less than 5% with a fuel cell in combination with replacing the oxygen with nitrogen without introducing exogenous carbon dioxide such that the oxygen will not destabilize the oxygen-dependent or oxygen-labile pigment if exogenous carbon dioxide is introduced into the container, and
(2) introducing exogenous carbon dioxide into the container to replace at least a portion of the atmosphere in the container with the exogenous carbon dioxide while retaining or further reducing the oxygen concentration in the atmosphere of the container, wherein the atmosphere in the container comprises at least 60 volume percent carbon dioxide after the step of introducing exogenous carbon dioxide.

This and other aspects of the invention is further described in the text that follows.

### BRIEF DESCRIPTION OF THE DRAWINGS

This invention will be further described with reference being made to the accompanying drawings.

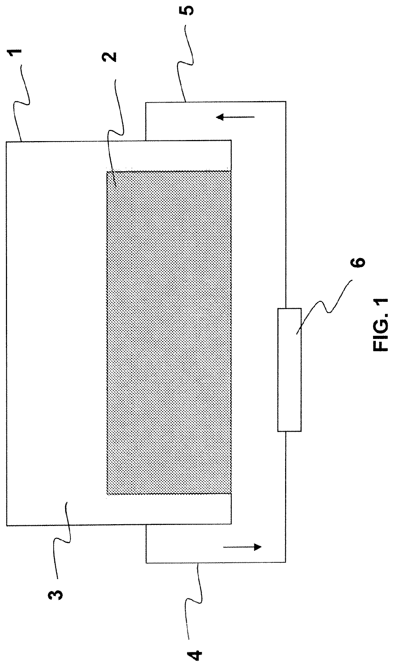

FIG. 1 is a schematic illustration of a container **1** used to transport or store a foodstuff **2** comprising an oxygen-dependent or oxygen-labile pigment wherein the container is connected to an external oxygen remover **6** which removes oxygen from the atmosphere **3** of the container through outlet **4** and inlet **5**.

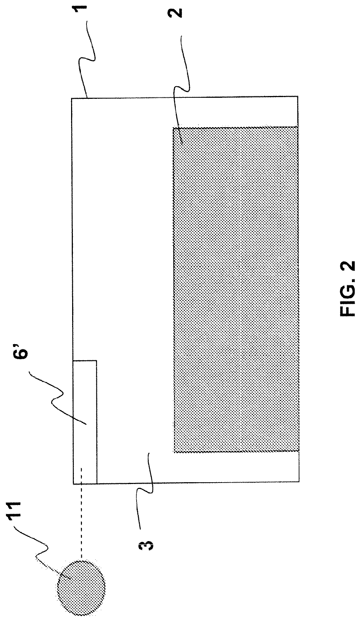

FIG. 2 is a schematic illustration of a container **1** used to transport or store a foodstuff **2** comprising an oxygen-dependent or oxygen-labile pigment wherein the container is connected to an internal oxygen remover **6'** which removes oxygen from the atmosphere **3** of the container.

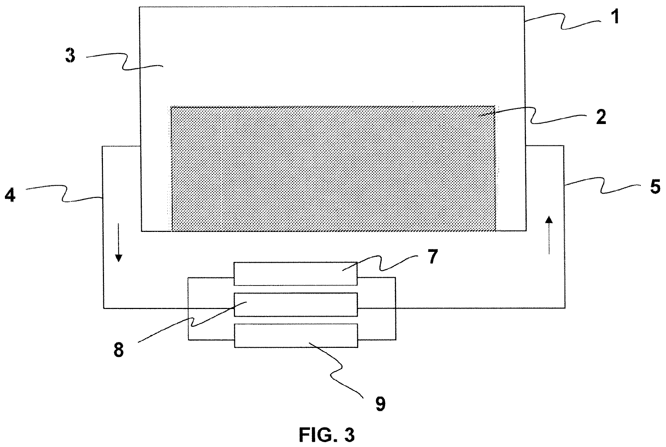

FIG. 3 is a schematic illustration of a container **1** used to transport or store a foodstuff **2** comprising an oxygen-dependent or oxygen-labile pigment wherein the container is connected to more than one external oxygen removers **7, 8** and **9** which remove oxygen from the atmosphere **3** of the container, and wherein the oxygen removers are in a parallel configuration. The three oxygen removers are for illustration purposes only. The number of oxygen removers can be one, two or more.

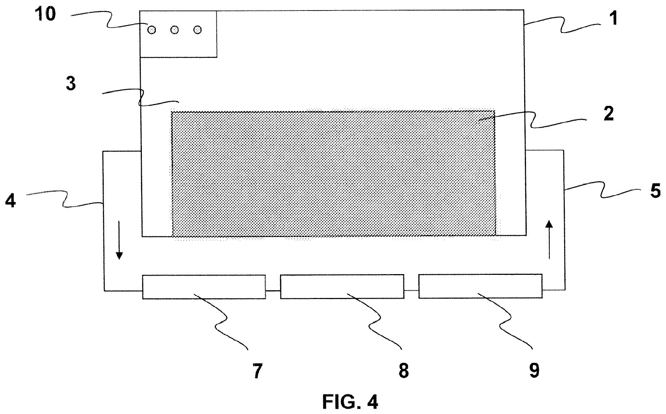

FIG. 4 is a schematic illustration of a container **1** used to transport or store a foodstuff **2** comprising an oxygen-dependent or oxygen-labile pigment wherein the container is connected to more than one external oxygen removers **7**, **8** and **9** which remove oxygen from the atmosphere **3** of the container, and wherein the oxygen removers are in a sequential configuration. The three oxygen removers are for illustration purposes only. The number of oxygen removers can be one, two or more.

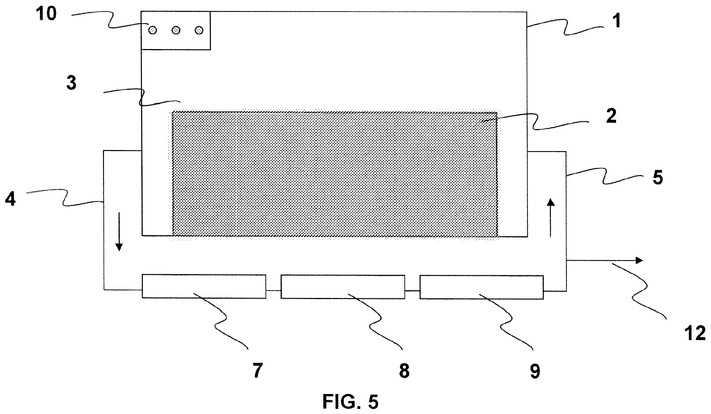

FIG. 5 is a schematic illustration of a container **1** used to transport or store a foodstuff **2** comprising an oxygen-dependent or oxygen-labile pigment wherein the container is connected to one or more external oxygen removers which remove oxygen from the atmosphere **3** of the container and wherein at least a portion of the gas is released before treatment with the oxygen removers. The container further comprises a sensor **10**, which comprises an oxygen sensor and/or a temperature sensor.

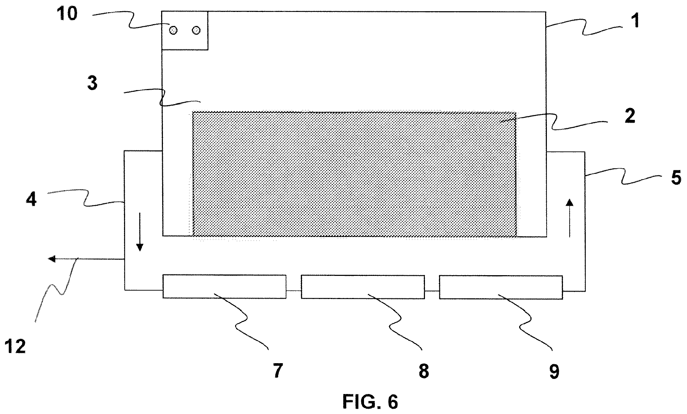

FIG. 6 is a schematic illustration of a container **1** used to transport or store a foodstuff **2** comprising an oxygen-dependent or oxygen-labile pigment wherein the container is connected to external oxygen removers which remove oxygen from the atmosphere **3** of the container and wherein at least a portion of the gas is released after treatment with the oxygen removers. The container further comprises a sensor **10**, which comprises an oxygen sensor and/or a temperature sensor.

### DETAILED DESCRIPTION

### Definitions

It is to be noted that as used herein and in the claims, the singular forms "a," "an" and "the" include plural referents unless the context clearly dictates otherwise. Thus, for example, reference to "a fuel cell" includes one, two or more fuel cells, and so forth.

The term "comprising" is intended to mean that the articles and methods include the recited elements, but do not exclude others. "Consisting essentially of' when used to define articles and methods, shall mean excluding other elements of any essential significance to the intended use. "Consisting of' shall mean excluding more than trace amounts of other elements and substantial method steps.

The term "about" when used before a numerical designation, e.g., temperature, time, amount, and concentration, including range, indicates approximations which may vary by (+ ) or (-) 15 %, 10 %, 5 % or 1 %.

The term "oxygen-labile pigment" refers to naturally occurring pigments which are susceptible to discoloration upon storage in the presence of oxygen or an oxidative condition. Examples of such pigments include carmine, beta carotene, carotenoids and paprika.

The term "oxygen-dependent pigment" refers to naturally occurring pigments which are dependent on oxygen to express fresh color. Examples of such pigments include myoglobin and hemoglobin.

Myoglobin is an iron- and oxygen-binding protein found in animal muscle tissues, and provides a bright red color to a foodstuff comprising myoglobin, such as red meat and tilapia. Its color depends on the state of the iron atom present in the myoglobin molecule. When the iron atom is present as Fe²⁺ and associated with an oxygen molecule, the myoglobin, which is referred to as oxymyoglobin (O₂Mb), shows the bright red color that consumers associate with fresh meat. When the iron atom is present as Fe²⁺ and associated with a water molecule, the myoglobin, which is referred to as myoglobin (Mb), shows a purple color, and when the iron atom is present as Fe³⁺ and associated with a water molecule, the myoglobin, which is referred to as metmyoglobin (MetMb), shows a brown color. Both O₂Mb and Mb are referred to as reduced forms of myoglobin. Meat products having either a purple or a brown color are not appealing to the consumers. The three states of myoglobin, and thus the colors, are reversible if MetMb can be reduced to Mb. In fresh meat, MetMb is reduced to Mb by enzymes. Mb is oxygenated to O₂Mb to give the bright red color when the oxygen concentration is high. When oxygen concentration is low, O₂Mb is deoxygenated to Mb. Both O₂Mb and Mb can be oxidized to MetMb. A meat product will irreversibly lose its bright red color if the meat loses its ability to reduce MetMb to Mb.

The term "red meat" refers to a meat product comprising myoglobin pigment. Examples of red meat include beef, pork, and lamb.

The term "discoloration" refers to an irreversible loss of the color of a pigment that indicates the apparent freshness of a foodstuff comprising the pigment. For example, the bright red color of myoglobin pigment is an indication to many consumers that a red meat is fresh. A red meat product that partially or completely loses the bright red color is often perceived by consumers as loss of freshness. Thus, an irreversible loss of the bright red color of the myoglobin pigment is referred to as discoloration.

The term "freshness" refers to a state of a foodstuff that displays characteristics, such as a color, texture and smell, as if it is just produced.

The term "inert gas" refers to a gas that is non-toxic and does not react with the foodstuff. Examples of inert gas include nitrogen, argon, krypton, helium, nitric oxide, nitrous oxide, and xenon.

The term "sealed container" refers to a container whose interior is isolated from ambient atmosphere without uncontrolled introduction and/or emission of gas, except gas that may diffuse into and/or out of the container through its wall material. A sealed container may comprise inlets and/or outlets which, when opened, allow controlled introduction and/or emission of gas to or from the container. Thus, a container is considered sealed for the purpose of this invention, if the architecture of the container controls the gas content within the container. In one embodiment, the architecture employs only the gas inside the container without the introduction of any further exogenous gases. That is to say that once flushing is completed, the atmosphere content is in a closed system such as depicted in FIGs. 1-4. The sealed container also encompasses architecture where gas can be introduced or released under controlled conditions. In some situations, the architecture only permits additional gas intake. This is particularly important in situations where the foodstuff absorbs gas, such as carbon dioxide. The intake of additional gas allows controlled gas intake into the headspace of the container. In another embodiment, the architecture permits both releasing a portion of the gas outside the container and introducing a different gas into the container. Such a system permits a more rapid deoxygenating process. Regardless, the container is considered sealed as the gaseous contents in the container are controlled and are independent of the atmosphere. Simply put, a sealed container is a container designed to prevent ambient atmospheric gas from entering into the container except by diffusion through the container (e.g. diffusion through a flexible plastic sheet). "Ambient atmosphere gas" or "ambient air" refers to gas in the general atmosphere typically comprising about 78 % of nitrogen and about 21 % of oxygen.

The term "deoxygenation of a foodstuff' or "deoxygenate of a foodstuff' refers to reduction of the oxygen contained in and around the foodstuff.

### Methods

The color of a foodstuff or beverage is an important factor in whether the consumers accept or reject the product. For example, consumers usually associate the loss of the bright red color of red meat, known as loss of "bloom" in the food industry, with loss of freshness and bacterial growth. Therefore, it is important to preserve the color of a foodstuff. In one aspect, provided herein are methods useful for stabilizing an oxygen-dependent or oxygen-labile pigment from discoloration, and transporting and storing foodstuffs comprising the pigment for an extended period of time.

In one aspect, provided herein is a method to stabilize an oxygen-dependent or oxygen-labile pigment from discoloration for a period of time of at least 3 days in a sealed container, which method comprises
(1) reducing the oxygen concentration in the atmosphere in the container to less than 5% with a fuel cell in combination with replacing the oxygen with nitrogen without introducing exogenous carbon dioxide such that the oxygen will not destabilize the oxygen-dependent or oxygen-labile pigment if exogenous carbon dioxide is introduced into the container, and
(2) introducing exogenous carbon dioxide into the container to replace at least a portion of the atmosphere in the container with the exogenous carbon dioxide while retaining or further reducing the oxygen concentration in the atmosphere of the container, wherein the atmosphere in the container comprises at least 60 volume percent carbon dioxide after the step of introducing exogenous carbon dioxide.

In some embodiments, reduction of oxygen concentration is achieved without reducing of the internal gaseous pressure of the container by more than 50 %. In some embodiments, reduction of oxygen concentration is achieved without reducing the internal gaseous pressure by more than 25 %. In some embodiments, reduction of oxygen concentration is achieved without reducing the internal gaseous pressure by more than 5 %. In some embodiments, reduction of oxygen concentration is achieved without reducing the internal gaseous pressure. This avoids excessive pressure differentiation between inside and outside of the container.

In some embodiments of the methods disclosed herein, in step (1), the oxygen concentration in the atmosphere of the container is reduced by operation of a fuel cell, which removes oxygen and is in gaseous communication with the container. One or more fuel cells may be contained internal or external to the container. In some embodiments, the fuel cells convert hydrogen and oxygen into water. The container further optionally comprises a hydrogen source internal or external to the container. The container further optionally comprises a holding element suitable for maintaining a hydrogen source internal or external to the container. The holding element for the hydrogen source in the container preferably is a box or bladder configured to hold the hydrogen source and, in some embodiments, the fuel cell. In some embodiments, the hydrogen source is one or more cylinders comprising compressed hydrogen.

In some embodiments of the methods disclosed herein, in step (1), the oxygen concentration in the atmosphere of the container is reduced by replacing the oxygen with the inert gas nitrogen. Other Examples of an inert gas include argon and helium. In some embodiments, the inert gas comprises no more than 1 % of carbon dioxide. In some embodiments, the inert gas comprises no carbon dioxide. In some embodiments of the disclosure, the inert gas is selected from the group consisting of nitrogen, helium and argon.

In some embodiments, the container comprises plumbing valves and fittings for use to flush the container with the inert gas to replace the oxygen in step (1) and/or to flush the container with carbon dioxide to replace the inert gas in step (2). The inert gas or carbon dioxide used to flush the container is introduced from an inlet, the gas in the container that is replaced by the inert gas or carbon dioxide flush is released through an outlet. After the flush, the inlet and outlet are closed to maintain the atmosphere obtained by the flush.

Gas flush and oxygen remover, such as fuel cell, operation can be done independently or in combination. In some embodiments of the disclosure, the container is flushed prior to turning on the oxygen remover, such as fuel cell. In some embodiments of the invention, the container is flushed while the oxygen remover, such as fuel cell is in operation to remove oxygen. The oxygen remover, such as fuel cell, may continue to remove oxygen during the transportation and/or storage. In some embodiments of the disclosure, the oxygen remover independently removes oxygen with no introduction of gas until deoxygenation is accomplished.

In some embodiments, provided herein is a method to stabilize myoglobin pigment of a foodstuff comprising myoglobin pigment during transportation and/or storage of the foodstuff in a sealed container to maintain the freshness and prevent discoloration of the foodstuff, which method comprises
(1) reducing the oxygen concentration of the atmosphere of the sealed container to less than 5 %, and incubate the foodstuff in the container for a period sufficient to reach deoxygenation of the foodstuff, and
(2) replacing at least a portion of the atmosphere of the sealed container with a sufficient amount of carbon dioxide so as to maintain the freshness and prevent discoloration of the foodstuff for a period of at least 3 days.

In some embodiments, provided herein is a method to stabilize myoglobin pigment of a foodstuff comprising myoglobin pigment during transportation and/or storage of the foodstuff in a sealed container to maintain the freshness and prevent discoloration of the foodstuff, which method comprises
(1) replacing at least a portion of the atmosphere in the container with a nitrogen flush so as to reduce the oxygen concentration to less than 5 %, and incubate the foodstuff in the sealed container for a period sufficient to reach deoxygenation, and
(2) replacing at least a portion of the atmosphere of the sealed container with a sufficient amount of carbon dioxide so as to maintain the freshness and prevent discoloration of the foodstuff upon return to ambient air after a period of at least 3 days in the atmosphere of the sealed container.

In some embodiments, the foodstuff is added to the container before step (1) of the methods disclosed herein. In some embodiments, the foodstuff is added to the container after the oxygen concentration is reduced or the portion of the atmosphere of the container is replaced with a nitrogen flush step (1) of the methods disclosed herein.

In some embodiments of the methods, in step (1), the oxygen concentration in the atmosphere of the sealed container is reduced to less than about 5 %, 4 %, 3 %, 2 % or 1 %. In some embodiments, the oxygen concentration in the atmosphere of the sealed container is reduced to less than 0.1 %. In some embodiments, the oxygen concentration in the atmosphere of the sealed container is reduced to less than 0.01 %.

In some embodiments of the methods, the foodstuff is incubated in the atmosphere of step (1) for at least about 1 hour before step (2) when the portion of the atmosphere is replaced with carbon dioxide. In some embodiments, the foodstuff is incubated in the atmosphere of step (1) for at least 2 hours, 5 hours, 7 hours or at least 12 hours before step (2) when the portion of the atmosphere is replaced with carbon dioxide.

In some embodiments of the methods, in step (2), the oxygen concentration in the atmosphere of the sealed container is further reduced to less than 1500 ppm, by for example, replacing the oxygen with carbon dioxide and/or operation of the fuel cell.

In some embodiments of the methods, in step (2), at least about 60 vol. percent of the atmosphere in the container is replaced with carbon dioxide. In some embodiments, the atmosphere in the container may be replaced with a low oxygen gas and the low oxygen gas is a mixture of CO₂ and nitrogen or other inert gas, for example, a mixture of 60 % CO₂ and 40 % nitrogen. In one embodiment, the carbon dioxide or the low oxygen gas contains less than 100, or 10 ppm oxygen. In some embodiments of the methods, in step (2), at least 90 vol. percent of the atmosphere in the container is replaced with carbon dioxide. In some embodiments, the atmosphere of the container comprises at least 60 vol. percent carbon dioxide after completion of step (2). In some embodiments, the atmosphere of the container comprises at least 90 vol. percent carbon dioxide after completion of step (2).

Preferably the gas used is acceptable by the relevant regulatory agencies, such as the U.S. Food and Drug Administration (FDA) "GRAS" (Generally Recognized as Safe) food grade carbon dioxide and nitrogen.

It should be understood that one source of oxygen in certain food stuffs is its release from hemoglobin. In such a case, carbon monoxide interacts with and binds more strongly to the hemoglobin than oxygen. Accordingly, for the purposes of this invention, carbon monoxide is considered not to be an inert gas.

In some embodiments of the methods, the container is a tote comprising a flexible, collapsible or expandable material with limited oxygen permeability which does not puncture when collapsing or expanding. The tote can withstand or volumetrically compensate for, the internal pressure loss such as carbon dioxide absorption by the foodstuff, or pressure gain, such as reduction of barometric pressure during transport and/or shipment.

In some embodiments, the tote comprises an initial headspace that compensates for such absorption permitting the oxygen concentration in the tote to be maintained at a desired level and/or without creating a vacuum condition. In some embodiments, the initial headspace occupies at least 30 or at least 40 volume percent of the tote. In some embodiments, the initial headspace occupies about 50 volume percent of the tote. In one embodiment, the headspace is about or at least 69 vol. percent of the tote. In some embodiments, the initial headspace is from about 30% to about 95 % the internal volume of the tote. In other embodiments, the initial headspace is from about 35 % to about 40 % of the internal volume of the tote, or alternatively, the initial headspace is about 30 % to about 35 % of the internal volume of the tote, or alternatively, the initial headspace is about 35 % of the internal volume of the tote.

In some embodiments, the vertical architecture of the tote facilitates minimizing horizontal space requirements for shipping the maximum number of pallets side-by-side. Embodiments that spread the headspace out horizontally may not be as economically viable at a large scale in addition to not enjoying the leak resistance as long as the headspace remains positive. In certain embodiments, no more than about 20 % of the expansion of the tote is in the horizontal direction, with the remainder of the gaseous expansion being in the vertical direction thus creating the "head pressure" and head space height of the tote. The tote is configured to expand in a vertical manner creating an initial "head pressure" after the carbon dioxide flush. Initial tote head pressures can range from about 0.1 to about 1.0 inches of water column (about 24.8 to about 248.8 Pa) or more above atmospheric pressure. The flexible tote can be made more flexible in the vertical direction than in the horizontal by conventional methods, such as using more flexible material in the vertical direction.

In some embodiments, the totes are able to accommodate a sufficient headspace such that the tote would require no continuous oxygen monitoring and/ further periodic gas flushing after the atmosphere of the tote is replaced with a sufficient amount of carbon dioxide in step (2). In some embodiment, the gas flushes with carbon dioxide in step (2) can proceed periodically for up to 72 hours, for example, 60 hours, or alternatively, 48 hours, or alternatively, 24 hours, after step (1). Alternatively, the initial gas flushes can proceed during the first 72 hours or less, or alternatively, the first 60 hours, or alternatively, the first 48 hours, or alternatively, the first 24 hours, after start of step (2).

In some embodiments, the container is a rigid room or container. When the container is a rigid room or container, after step (2), an inert gas, such as nitrogen, or carbon dioxide can be introduced continuously or intermittently as needed to the room or container to compensate for gas absorption by the foodstuff and keep the oxygen concentration at a desired low level until the foodstuff is released for distribution. Alternatively, an oxygen remover may be operated continuously or intermittently to keep the oxygen concentration at a desired low level.

In some embodiments of the methods, the foodstuff is red meat. In some embodiments, the foodstuff is beef, lamb or pork. In some embodiments, the foodstuff is fish comprising the myoglobin pigment or hemoglobin pigment. In some embodiments, the foodstuff is tilapia. In some embodiments, the foodstuff is tuna, mackerel and other seafoods.

The methods can be used in the transporting or storing the foodstuff for a time periods in excess of 100 days. In some embodiments of the methods, the transportation and/or storage is for a time period of at least 3 days. In some embodiments, the transportation and/or storage is for a time period of at least 5, 10, 15, 30, or 45 days.

Oxygen may accumulate in the container during transportation and/or storage by, for example, diffusion into the container through the material of limited oxygen permeability or at the seal of the container. Oxygen may also be released by the foodstuff within the container or from containers in which the foodstuff is packaged. In some embodiments, the oxygen concentration of the atmosphere of the containers is maintained at or below 1500 ppm during the transportation and/or storage by, for example, operation of the one or more fuel cells or additional flushes with a gas comprising an inert gas and/or carbon dioxide. The removal of oxygen can be performed continuous or periodically. If performed periodically, the removal of oxygen can be pre-programmed according to a schedule or triggered by a preset oxygen concentration in the container.

The oxygen in the atmosphere of the container may also be removed in step (1) and/or step (2) by other processes, such as chemical catalytic processes. A device to remove oxygen, such as a fuel cell or oxygen absorber, is referred to as "oxygen remover." Examples of oxygen absorbers include iron containing absorbers and oxygen adsorbers, which are known in the art and are commercially available. Oxygen removers also include removers utilizing pressure swing adsorption methods (PSA) and membrane separation methods.

Catalytic systems, such as those utilizing elemental metal such as platinum or palladium catalysts, can be used as oxygen removers but the use of powders necessary to provide high catalytic surface area runs the risk of contamination. Nevertheless, when appropriate safeguards are used, these can be employed. Such safeguards include embedding the metal catalysts into a membrane electrode assembly such as present in PEM fuel cells.

### Systems

In another aspect of the disclosure, provided herein is a system useful in transporting and/or storing of a foodstuff comprising an oxygen-dependent or oxygen-labile pigment which method comprises one or more sealable containers comprising the foodstuff.

The system further comprises one or more fuel cells. The containers are in gaseous communication with one or more of fuel cells internal or external to the containers. One fuel cell may be in gaseous communication with one or multiple containers. Multiple containers may share one or more fuel cells external to the containers. The system optionally further comprises one or more hydrogen sources for operation of the fuel cells to remove oxygen. The system further comprises a fan. The fan is powered by the fuel cell. In some embodiments, the fan is powered by another power source.

The system further comprises an inert gas source for providing the inert gas to replace the oxygen in the container in step (1) of the methods provided herein. The inert gas comprises argon, helium, and/or nitrogen, and comprises no more than 1 %, or no more than 0.1 % of carbon dioxide. The inert gas comprises no carbon dioxide.

The system optionally further comprises a carbon dioxide source (including a gas source providing a low oxygen gas as described which comprises an inert gas and carbon dioxide, such as a gas comprising at least 60 % carbon dioxide and remainder is an inert gas, such as nitrogen) for providing carbon dioxide to replace at least a portion of the atmosphere in the container in step (2) of the methods provided herein.

The container may contain at least one inlet controlled by a valve. During step (1) of the methods provided herein, the inlet may be connected to a source of an inert gas and allows the inert gas to enter into the container to replace at least a portion of the atmosphere of the container that contains oxygen. During step (2) of the methods provided herein, the inlet is connected to a carbon dioxide source and allows carbon dioxide to enter into the container to replace at least a portion of atmosphere of the container containing a reduced concentration of oxygen. The inert gas source and the carbon dioxide source can be any gas source that can provide to the inlet the inert gas or carbon dioxide, respectively, such as a gas cylinder or bladder containing the gas. The inlet is closed when the carbon dioxide concentration in the container is sufficient to preserve the foodstuff contained in the container for a desired amount of time so as to maintain the atmosphere of the sealed container. The inlet used in step (1) and step (2) may be the same or different.

The container may further comprise at least one outlet controlled by a valve which allows the gas inside the container to escape when the inert gas or carbon dioxide is introduced to the container in step (1) or step (2), respectively. The outlet is connected to one or more fuel cells and then to one or more of the inlets. The gas inside the container flushed out by the inert gas is passed through the one or more fuel cells to remove the oxygen from the gas. The gas with oxygen removed can be an inert gas source and is then reintroduced to the container through the inlet that is connected to the one or more fuel cells. Other oxygen removers can be used to replace the fuel cell.

Certain configurations of the container/system are illustrated in Figures 1-6.

In FIG. 1, container **1** containing a foodstuff **2** comprising an oxygen-dependent or oxygen-labile pigment is connected to an external oxygen remover **6** via outlet **4** and inlet **5**. Gas inside the container is released through outlet **4** and treated with oxygen remover **6** which removes oxygen from the gas. The resulting gas with reduced oxygen concentration is reintroduced into container **1** through inlet **5**.

In FIG. 2, container **1** comprises an internal oxygen remover **6'** which removes oxygen from the atmosphere **3** of the container. When oxygen remover **6'** is a hydrogen fuel cell, the hydrogen source **11** can be either internal or external to the container.

In FIG. 3, container **1** containing foodstuff **2** comprising an oxygen-dependent or oxygen-labile pigment is connected to more than one external oxygen removers **7**, **8** and **9**. The oxygen removers are in a parallel configuration, each treating a portion of the gas released from outlet **4** to remove the oxygen. The resulting gas is combined and reintroduced into container **1** through inlet **5**.

In FIG. 4, container **1** containing foodstuff **2** comprising an oxygen-dependent or oxygen-labile pigment is connected to more than one external oxygen removers **7**, **8** and **9**. The oxygen removers are in a sequential configuration, so that oxygen remover **7** removes a portion of the oxygen, oxygen removers **8** further removes additional oxygen, and so forth. After treatment with the last oxygen remover in the series, the resulting gas is reintroduced into container **1** through inlet **5**.

In FIG. 5, container **1** containing foodstuff **2** comprising an oxygen-dependent or oxygen-labile pigment is connected to external oxygen removers which remove oxygen from the atmosphere **3** of container **1**. After the gas is treated with the oxygen removers, at least a portion of the gas is released though opening **12**.

In FIG. 6, container **1** containing foodstuff **2** comprising an oxygen dependent or oxygen-labile pigment is connected to external oxygen removers which remove oxygen from the atmosphere **3** of container **1**. Before the gas is treated with the oxygen removers, at least a portion of the gas is released though opening **12**.

Fuel cells useful herein are known in the art. The fuel cell is a hydrogen fuel cell. As used herein, a "hydrogen fuel cell" is any device capable of converting oxygen and hydrogen into water. The complete fuel cell is internal to the tote. This can be achieved by having a hydrogen source internal or external to the container. The anode of the fuel cell is in communication with the hydrogen source. This hydrogen source permits generation of protons and electrons. The cathode of the fuel cell is in communication with the environment in the container (the oxygen source). In the presence of oxygen, the protons and electrons generated by the anode interact with the oxygen present at the cathode to generate water.

The hydrogen source for the fuel cell is either a bladder hydrogen source, a rigid container hydrogen source, or a gaseous mixture comprising carbon dioxide and less than 5% by volume hydrogen. The hydrogen source is contained within a rigid container, such as a gas cylinder. The hydrogen source is a compressed or uncompressed hydrogen source. The hydrogen source is uncompressed, which, for example, has a pressure of not greater than 40 psia (275.8 kPa). Compressed hydrogen sources are preferably maintained at a pressure of no greater than 10,000 psia (68947 kPa). The hydrogen source is in direct communication with the anode of the hydrogen fuel cell in such a manner as to provide hydrogen for the duration of the transporting or storage time.

The hydrogen source is generated by a chemical reaction. Examples of methods of chemically generating hydrogen are well known in the art and include generation of hydrogen by an electrolytic process, including methods using PEM electrolyzers, alkaline electrolyzers using sodium or potassium hydroxide, solid oxide electrolyzers, and generation of hydrogen from sodium borohydride. In each case, the hydrogen is generated so that the hydrogen is made available to the anode of the fuel cell.

The hydrogen source is a gaseous mixture comprising hydrogen present in the environment of the container. The gaseous mixture preferably comprises carbon dioxide and hydrogen. The gaseous mixture comprises nitrogen and hydrogen. In further embodiments, the gaseous mixture comprises hydrogen, carbon dioxide, and nitrogen. It is contemplated that other inert gases can be present in the gaseous mixture. In some embodiments, the amount of hydrogen present in the gaseous mixture is less than 10% hydrogen by volume, less than 5% hydrogen by volume, or less than 2% hydrogen by volume.

The fuel cell comprises a carbon dioxide remover in direct communication with the sealed anode component of the fuel cell. Carbon dioxide has the potential to permeate across the PEM to anode plate, thereby interfering with hydrogen access to the anode plate. Removal of some or all of the carbon dioxide from the anode plate of the fuel cell by the carbon dioxide remover allows increased access to the fuel cell by hydrogen and thus increasing the fuel cells ability to remove oxygen from the container environment.

There are numerous processes known in the art that can be utilized in the carbon dioxide remover. These methods include absorption processes, adsorption processes, such as pressure-swing adsorption (PSA) and thermal swing adsorption (TSA) methods, and membrane-based carbon dioxide removal. Compounds that can be used in the carbon dioxide removers include, but are not limited to, hydrated lime, activated carbon, lithium hydroxide, and metal oxides such as silver oxide, magnesium oxide, and zinc oxide. Carbon dioxide can also be removed from the anode by purging the anode with a gas, such as hydrogen gas or water vapor.

The carbon dioxide remover comprises hydrated lime. In this embodiment, for example, the hydrated lime is contained in a filter cartridge that is in vapor communication with the fuel cell anode so that the carbon dioxide present at anode plate of the fuel cell comes into contact and with and is absorbed to the hydrated lime. A particular embodiment comprises two hydrated lime filter cartridges, each in vapor communication with an anode outlet. The hydrated lime filters facilitate removal of carbon dioxide from the anode plate of the fuel cell.

The container or the system optionally further comprises a holding element suitable for maintaining the hydrogen source so as the hydrogen source is held stably within the container or the system. The holding element is a box configured to stably hold the hydrogen source, and optionally the fuel cell. The holding element is a sleeve affixed to an internal wall of the container. This sleeve is capable of holding a bladder-containing hydrogen source or rigid container hydrogen source as well as other containers suitable for containing a hydrogen source. In either event, the hydrogen source is in direct communication with the anode of the fuel cell.

Water generated by a hydrogen fuel cell may be released into the container, for example, to a water-holding apparatus, such as a tray or tank, configured to collect the water as it is generated by the fuel cell. Alternatively, the container may contain desiccant or absorbent material that is used to absorb and contain the water. Suitable desiccants and absorbent materials are well known in the art. The water may alternatively be vented outside of the container, thus providing a suitable environment for the storage and transportation of goods that are optimally stored in dry environments.

The container further comprises a fan. In some embodiments, the fan is powered by the fuel cell. The fan is powered by another power source.

The system may also contain other oxygen removers.

In some embodiments, the container is a rigid room or container described herein.

The container is a tote described herein.

The flexible, collapsible or expandable tote materials for use in this invention are those having limited oxygen permeability. Materials of limited oxygen permeability preferably have an oxygen transmission rate (OTR) of less than 10 cubic centimeters/100 square inch/24 hours/atm (10cc/0.065m²/24 hours/atm), more preferable materials of limited oxygen permeability are materials having an OTR of less than 5 cubic centimeters/100 square inch/24 hours/atm (5cc/0.065m²/24 hours/atm), even more preferably materials of limited oxygen permeability materials having an OTR of less than 2 cubic centimeters/100 square inch/24 hours/atm (2cc/0.065m²/24 hours/atm); most preferably materials of limited oxygen permeability are materials having an OTR of less than 1 cubic centimeters/100 square inch/24 hours/atm (1cc/0.065m²/24 hours/atm). A non-exhaustive list of materials that can be used to make the flexible, collapsible or expandable tote is shown in Table 1.

**Table 1**

| **MATERIAL** | **Moisture Vapor Transmission Rate (MVTR)** | **Oxygen Transmission Rate OTR** |
|---|---|---|
| | gm/100 sq. in./24 hours (gm/0.065m²/24 hours) | c.c./100 sq. in./24 hours/atm (cc/0.065m²/24 hours) |
| Saran 1 mil | 0.2 | 0.8-1.1 |
| Saran HB 1 mil | 0.05 | 0.08 |
| Saranex 142 mil | 0.2 | 0.5 |
| Aclar 33C .75 mil (military grade) | 0.035 | 7 |
| Barex 210 1 mil | 4.5 | 0.7 |
| Polyester 48 Ga. | 2.8 | 9 |
| 50 M-30 Polyester Film | 2.8 | 9 |
| 50 M-30 PVDC Coated Polyester | 0.4 | 0.5 |
| Metallized Polyester 48 Ga. | 0.05 | 0.08-0.14 |
| Nylon 1 mil | 19-20 | 2.6 |
| Metallized Nylon 48 Ga. | 0.2 | 0.05 |
| PVDC-Nylon 1 mil | 0.2 | 0.5 |
| 250 K Cello | 0.5 | 0.5 |
| 195 MSBO Cello | 45-65 | 1-2 |
| LDPE 2 mil | 0.6 | 275 |
| Opp .9 mil | 0.45 | 80 |
| EVAL, Biax 60 Ga. | 2.6 | 0.03 |
| EVAL EF-E 1 mil | 1.4 | 0.21 |
| EVAL EF-F 1 mil | 3.8 | 0.025 |
| Benyl H 60 Ga | 0.7 | 0.4 |
| PVC 1 mil | 4-5 | 8-20 |
| Polycarbonate 1 mil | 9 | 160 |
| Polystyrene 1 mil | 7.2 | 4,800 |
| Pliofilm 1 mil | 1.7 | 660 |

The container and/or the system may further comprise a temperature control system, such as cooling system, for maintaining a temperature of the container sufficient to preserve the color of the pigment and freshness of the foodstuff. Such temperatures would depend on the nature of the pigment and/or the foodstuff, and can be determined by one of skill in the art. The temperature is generally maintained in a range of about 32-38 °F (about 0-3.3 °C), a range of 32-35 °F (0-1.7 °C), or a range of 32-33°F (0-0.6 °C) or 28-32°F (-2.2-0 °C. Variation in the temperature is allowed as long as the temperature is maintained within a range to preserve the foodstuff and the color of the pigment.

The container optionally contains monitors to monitor and/or record oxygen levels, hydrogen levels, fuel cell operation, and temperature, etc. An oxygen sensor, for example, a trace oxygen sensor (Teledyne), is used to monitor the level of oxygen present in the tote environment. The oxygen monitor may trigger operation of the oxygen remover and/or provide an alert when the oxygen level in the container exceeds a predetermined level. Optionally, the container further comprises a box comprising one or more of these monitors. The box further optionally comprises a visible indicator, such as an LED light, which indicates problems of the devices in the box so that the problematic device or the box can be immediately replaced before sealing the tote. This facilitates rapid detection of any failure by unskilled labor and allows for rapid turn-around of boxes into service with minimal testing. The box also alerts users on arrival of system if oxygen or temperature (time and temperature) limits are exceeded, for example, using wireless communication, such as radio frequency transmission, along with a visible indicator, such as a red LED light.

It is contemplated that it may be desirable to limit the exposure of the foodstuff to excess hydrogen during transportation or storage. Accordingly, the container or system is configured to minimize the exposure of the foodstuff to hydrogen present in the environment. This can be achieved by removing the excess hydrogen in the container or system by mechanical methods, such as shut off valves or flow restrictors to modulate, chemical methods, or combinations thereof. Examples of chemical methods of removing hydrogen include the use of a hydrogen sink comprised of polymers or other compounds that absorb hydrogen. Compounds suitable for use as hydrogen absorbers are known in the art and are commercially available ("Hydrogen Getters" Sandia National Laboratories, New Mexico; REB Research & Consulting, Ferndale, MI.) The compounds can be present in the container or can be in direct communication with the cathode of the fuel cell. Flow of hydrogen can be controlled by using an oxygen sensor connected to the hydrogen source such that hydrogen flow is minimized or eliminated when the level of oxygen falls below a minimum set point.

The system or containers are configured so as to be suitable for transporting and/or storing in a shipping freighter. A shipping freighter means any vehicle that can be used to transport and/or store the system including, but not limited to, an ocean shipping freighter, a trucking shipping freighter (such as a tractor-trailer), a railroad car, and an airplane capable of transporting cargo load. One or more containers can be used in a single shipping freighter and each can be configured to have a different gaseous environment as well as a different foodstuff. The containers can be delivered to the same or different site(s). The size of each container can be different. The containers may hold as little as a few ounces of foodstuff to as much as, or greater than, 50,000 pounds (22677kg), or tons of foodstuff. In some embodiments, the container can hold about 500 pounds (226.8kg), about 1000 pounds (453.6kg), or about 2000 pounds (907.2kg) of foodstuff. The number of packaging modules per system depends both on the size of the shipping freighter used to transport and/or store the foodstuff and the size of the containers.

### Example

Tilapia fillets were stored in the following example. Tilapia fillets contain "blood lines" with a bright red color due to the presence of myoglobin pigment. If upon storage, the myoglobin becomes irreversibly discolored, the blood lines of the tilapia fillets would lose the bright red color and the fish would not appear fresh.

To each of the two containers, Container 1 and Container 2, was placed about 1 metric ton of fresh chilled tilapia fillets packaged in 60 boxes per container (and average of 112 fillets per box) at about 32 °F (0 °C) in Canas, Costa Rica. Container 2 was initially flushed with nitrogen with simultaneous fuel cell operation to remove oxygen. Container 1 was initially flushed with carbon dioxide with simultaneous fuel cell operation to remove oxygen. The oxygen concentration in both containers reached below 0.5 % at the end of the initial flush. The containers were kept for 11 to 12 hours at which time the oxygen concentration rose to just under about 1 % in both containers. Both containers were then flushed with carbon dioxide until the oxygen concentration was below 0.1 %. The containers were held for 30 days. At the end of the 30 day period, the containers were opened and the tilapia fillets inside the containers were observed for freshness. The tilapia fillets in Container 2 had bright red blood lines and were indistinguishable in all aspects from tilapia fillets that were just prepared. The blood lines of the tilapia fillets in Container 1 became a brown color which made the fish look unfresh.

## Claims

1. A method to stabilize an oxygen-dependent or oxygen-labile pigment from discoloration for a period of time of at least 3 days in a sealed container, which method comprises
(1) reducing the oxygen concentration in the atmosphere in the container to less than 5% with a fuel cell in combination with replacing the oxygen with nitrogen without introducing exogenous carbon dioxide such that the oxygen will not destabilize the oxygen-dependent or oxygen-labile pigment if exogenous carbon dioxide is introduced into the container, and
(2) introducing exogenous carbon dioxide into the container to replace at least a portion of the atmosphere in the container with the exogenous carbon dioxide while retaining or further reducing the oxygen concentration in the atmosphere of the container, wherein the atmosphere in the container comprises at least 60 volume percent carbon dioxide after the step of introducing exogenous carbon dioxide.

2. The method of claim 1, wherein the pigment is myoglobin.

3. The method of claim 1, wherein the oxygen concentration of step (2) is maintained in the sealed container at least three days.

4. The method of claim 1, wherein the fuel cell is internal to the container.

5. The method of claim 1, wherein the fuel cell is external to the container.

6. The method of claim 1, wherein in step (1), the oxygen is replaced with the nitrogen while the fuel cell is in operation.

7. The method of claim 1, wherein before step (2), the foodstuff is incubated in the atmosphere produced in step (1) so as to reach deoxygenation of the foodstuff.

8. The method of claim 1, wherein before step (2), the foodstuff is incubated in the atmosphere of the container produced in step (1) for at least 1 hour.

9. The method of claim 1, wherein in step (2), the oxygen concentration in the atmosphere of the sealed container is further reduced to less than 1500 ppm.

10. The method of claim 1, wherein the sealed container is a tote comprising a flexible, collapsible or expandable material, and wherein the tote comprises a headspace.

11. The method of claim 1, wherein the sealed container is rigid container.

12. The method of claim 1, wherein the pigment is myoglobin pigment present in red meat, tilapia, tuna, or mackerel.

## Patentansprüche

1. Verfahren zur Stabilisierung eines sauerstoffabhängigen oder sauerstofflabilen Pigments gegen Verfärbung während eines Zeitraums von mindestens 3 Tagen in einem dichtschließenden Behälter, wobei das Verfahren umfasst
(1) Verringern der Sauerstoffkonzentration in der Atmosphäre im Behälter auf unter 5 % mit einer Brennstoffzelle in Verbindung mit dem Ersetzen des Sauerstoffs durch Stickstoff ohne Einleiten exogenen Kohlendioxids, sodass der Sauerstoff das sauerstoffabhängige oder sauerstofflabile Pigment nicht destabilisiert, wenn exogenes Kohlendioxid in den Behälter eingeleitet wird, und
(2) Einleiten exogenen Kohlendioxids in den Behälter, um mindestens einen Teil der Atmosphäre im Behälter durch exogenes Kohlendioxid zu ersetzen, wobei gleichzeitig die Sauerstoffkonzentration in der Atmosphäre des Behälters aufrechterhalten oder weiter verringert wird, wobei die Atmosphäre im Behälter nach dem Schritt des Einleitens von exogenem Kohlendioxid mindestens 60 Volumenprozent Kohlendioxid umfasst.

2. Verfahren nach Anspruch 1, wobei das Pigment Myoglobin ist.

3. Verfahren nach Anspruch 1, wobei die Sauerstoffkonzentration des Schritts (2) im dichtschließenden Behälter mindestens drei Tage aufrechterhalten wird.

4. Verfahren nach Anspruch 1, wobei sich die Brennstoffzelle im Behälter befindet.

5. Verfahren nach Anspruch 1, wobei sich die Brennstoffzelle außerhalb des Behälters befindet.

6. Verfahren nach Anspruch 1, wobei in Schritt (1) der Sauerstoff während des Betriebs der Brennstoffzelle durch den Stickstoff ersetzt wird.

7. Verfahren nach Anspruch 1, wobei vor Schritt (2) das Nahrungsmittel in der in Schritt (1) erzeugten Atmosphäre inkubiert wird, um eine Desoxidation des Nahrungsmittels zu erreichen.

8. Verfahren nach Anspruch 1, wobei vor Schritt (2) das Nahrungsmittel in der in Schritt (1) erzeugten Atmosphäre des Behälters mindestens 1 Stunde lang inkubiert wird.

9. Verfahren nach Anspruch 1, wobei in Schritt (2) die Sauerstoffkonzentration in der Atmosphäre des dichtschließenden Behälters weiter auf unter 1500 ppm verringert wird.

10. Verfahren nach Anspruch 1, wobei der dichtschließende Behälter eine Tragetasche ist, die ein flexibles komprimierbares oder dehnbares Material umfasst, wobei die Tragetasche einen Kopfraum umfasst.

11. Verfahren nach Anspruch 1, wobei der dichtschließende Behälter ein starrer Behälter ist.

12. Verfahren nach Anspruch 1, wobei das Pigment Myglobinpigment ist, das in rotem Fleisch, Buntbarsch, Thunfisch oder Makrele vorliegt.

## Revendications

1. Procédé de stabilisation d'un pigment dépendant de l'oxygène ou labile en présence d'oxygène contre la décoloration pendant une période d'au moins 3 jours dans un récipient scellé, lequel procédé comprend
(1) la réduction de la concentration en oxygène dans l'atmosphère du récipient à moins de 5 % avec une pile à combustible en combinaison avec le remplacement de l'oxygène par de l'azote sans introduire du dioxyde de carbone exogène de sorte que l'oxygène ne déstabilisera pas le pigment dépendant de l'oxygène et labile en présence d'oxygène si du dioxyde de carbone exogène est introduit dans le récipient, et
(2) l'introduction de dioxyde de carbone exogène dans le récipient pour remplacer au moins une partie de l'atmosphère du récipient par du dioxyde de carbone exogène tout en conservant ou en réduisant davantage la concentration en oxygène dans l'atmosphère du récipient, dans lequel l'atmosphère du récipient comprend au moins 60 pourcent en volume de dioxyde de carbone après l'étape d'introduction de dioxyde de carbone exogène.

2. Procédé selon la revendication 1, dans lequel le pigment est une myoglobine.

3. Procédé selon la revendication 1, dans lequel la concentration en oxygène de l'étape (2) est conservée dans le récipient scellé au moins trois jours.

4. Procédé selon la revendication 1, dans lequel la pile à combustible est interne au récipient.

5. Procédé selon la revendication 1, dans lequel la pile à combustible est externe au récipient.

6. Procédé selon la revendication 1, dans lequel à l'étape (1), l'oxygène est remplacé par de l'azote pendant que la pile à combustible fonctionne.

7. Procédé selon la revendication 1, dans lequel avant l'étape (2), le produit alimentaire est incubé dans l'atmosphère produite à l'étape (1) de façon à atteindre une désoxygénation du produit alimentaire.

8. Procédé selon la revendication 1, dans lequel avant l'étape (2), le produit alimentaire est incubé dans l'atmosphère du récipient produite à l'étape (1) pendant au moins 1 heure.

9. Procédé selon la revendication 1, dans lequel à l'étape (2), la concentration en oxygène dans l'atmosphère du récipient scellé est réduite davantage à moins de 1 500 ppm.

10. Procédé selon la revendication 1, dans lequel le récipient scellé est un bac comprenant un matériau flexible, pliable et extensible, et dans lequel le bac comprend un espace libre.

11. Procédé selon la revendication 1, dans lequel le récipient scellé est un récipient rigide.

12. Procédé selon la revendication 1, dans lequel le pigment est un pigment de myoglobine présent dans la viande rouge, le tilapia, le thon ou le maquereau.
